# FASCICULE DE BREVET EUROPEEN

(11) **EP 0 860 305 B1**
(45) Date de publication et mention de la délivrance du brevet: **10.10.2001**
(21) Numéro de dépôt: 98400354.1
(22) Date de dépôt: 16.02.1998
(51) Int. Cl.: B60D 5/00, B61D 17/22

(54) **Plancher élastique destiné notamment à un soufflet de passage**
Elastischer Fussboden, insbesondere für Verbindungsdurchgang Faltenbalg
Resilient floor in particular for communication passage bellows

(30) Priorité: 20.02.1997 FR 9702016
(43) Date de publication de la demande: 26.08.1998
(73) Titulaire: HUTCHINSON, 75008 Paris (FR)
(72) Inventeur: Beaubatie, Laurent, 94700 Maisons-Alfort (FR)
(74) Mandataire: Jacquard, Philippe Jean-Luc

(56) Documents cités:
- EP-A- 0 297 936
- DE-A- 3 035 159
- US-A- 2 578 140
- US-A- 3 410 226

## Description

La présente invention a pour objet un plancher élastique destiné notamment à un soufflet de passage ou couloir d'intercirculation entre deux voitures et plus particulièrement destiné à des applications ferroviaires telles que métro, tramway, etc ...

Dans les applications au transport métropolitain dit "Métro", on connaît des rames qui, grâce à la présence de soufflets entre les voitures, permettent aux passagers de circuler librement d'une voiture à l'autre.

Cependant, de tels trains doivent circuler sur des voies de conception parfois ancienne, qui peuvent dater du début du siècle, et comportent des courbes à faible rayon de courbure qui posent des problèmes de fatigue en raison des débattements angulaires ou de désalignement importants qu'ils imposent aux soufflets.

D'autre part, pour des raisons de sécurité, les matériaux employés pour réaliser les soufflets doivent en cas d'incendie être autoextinguibles et satisfaire à des normes de toxicité. Ceci impose d'utiliser pour les planchers des soufflets des matériaux qui ont des caractéristiques de tenue en fatigue peu satisfaisantes.

Dans le cas particulier d'un plancher élastique qui doit à la fois permettre de supporter le poids des passagers qui traversent le soufflet et de supporter des débattements angulaires extrêmes tout en conservant de bonnes caractéristiques de fatigue, on s'aperçoit que ces exigences sont particulièrement difficiles à satisfaire.

Ces planchers élastiques sont soumis à des tests de qualification, par exemple le test standard RATP, qui correspondent aux conditions d'utilisation réelles.

Un point important est qu'il existe un débattement angulaire maximal α_{M} auquel sera soumis le plancher et qui a une influence déterminante sur la durée de vie du plancher en raison du fait que les matériaux qui doivent être employés ont une mauvaise tenue aux efforts répétés en traction.

Un plancher élastique ayant les caractéristiques du préambule de la revendication 1 est décrit dans le document EP-A-0 297 936.

Un objet de la présente invention est un plancher élastique ayant un tenue à la fatigue améliorée.

Un autre objet de la présente invention est un plancher élastique susceptible de supporter des débattements angulaires élevés.

Un autre objet de la présente invention est un plancher élastique permettant de séparer la fonction de déformabilité et la fonction d'appui du plancher.

Au moins un de ces buts est atteint par un plancher élastique destiné notamment à un soufflet de passage entre deux voitures qui, lors de leur déplacement en ligne droite, se déplacent selon une direction longitudinale, ledit plancher élastique présentant des ondulations transversales permettant audit plancher de suivre les déplacements relatifs desdites voitures dans les courbes, tout en permettant à des passagers de circuler entre lesdites voitures en marchant sur la face supérieure du plancher, au moins une zone de ladite face supérieure ayant une surface ondulée présentant des régions de sommet, et des régions en creux orientées dans le sens transversal et correspondant aux dites ondulations caractérisé en ce qu'il comporte un tapis en matériau élastique dont la face inférieure est posée sur la face supérieure du plancher élastique de manière à recouvrir au moins une partie d'une dite zone ayant une surface ondulée.

Lesdites ondulations sont de préférence telles que, pour le débattement angulaire maximal α_{M} que le plancher est destiné à supporter, la développée des ondulations soit supérieure ou égale à l'élongation maximale atteinte par le plancher.

Ledit tapis présente avantageusement, à sa face inférieure, des prolongements, de préférence des nervures, pénétrant au moins partiellement dans lesdites régions en creux, mais reposant de préférence au fond de ces régions en creux, lorsque le tapis est posé sur la face supérieure du plancher élastique. Ceci permet de découpler la fonction d'appui et de déformation du plancher élastique.

Au moins certaines nervures peuvent présenter un profil complémentaire de celui des régions en creux des ondulations.

Au moins certaines nervures peuvent présenter une région bordant la face inférieure du tapis et qui présente un jeu avec les régions en creux des ondulations correspondantes lorsque le tapis est posé sur le plancher.

Les nervures peuvent s'étendre sur une partie seulement de la longueur des régions en creux. Elles s'étendent avantageusement sur la majeure partie et de préférence sur la totalité de la longueur des régions en creux.

Au moins certaines nervures peuvent présenter une région centrale dépourvue de matière, ce qui permet au tapis de mieux suivre les déformations des ondulations du plancher, notamment dans la position repliée des ondulations qui induit une compression des nervures. La face supérieure du plancher peut présenter des stries disposées au dessus d'au moins certaines desdites nervures. Ceci permet également au tapis de mieux suivre les déformations, et également de minimiser la formation de "bosses" lorsque les ondulations sont repliées.

Le tapis en matériau élastique peut présenter au voisinage de sa surface supérieure un renfort mécanique.

Le tapis peut être réalisé dans le même matériau que le plancher élastique. Que le matériau soit ou non le même, il peut être au moins en partie réalisé en mousse à alvéoles ouvertes ou fermées.

Le plancher peut comporter une région centrale de passage dont la face supérieure est dépourvue desdites ondulations, et le tapis en matériau élastique peut être posé sur toute la surface du plancher.

L'invention concerne enfin un soufflet d'interconnexion entre deux voitures caractérisé en ce qu'il comporte deux planchers tels que définis ci-dessus, séparés par un anneau central.

D'autres caractéristiques et avantages apparaîtront mieux à la lecture de la description qui va suivre, donnée à titre d'exemple non limitatif, en liaison avec les dessins ci-annexés, dans lesquels :
- les figures 1a et 1b représentent respectivement en vue latérale et en vue de dessus un plancher élastique équipé d'un tapis élastique selon l'invention.
- la figure 2a représente, en vue de dessous un plancher élastique susceptible d'être mis en oeuvre selon l'invention.
- les figures 2b et 2c représentent une utilisation de l'invention, mettant en oeuvre deux planchers par soufflet, respectivement pour un déplacement en ligne droite et dans une condition extrême de fonctionnement.
- les figures 3a à 3e représentent en coupe longitudinale partielle le plancher élastique de la figure 2a, la figure 3a étant réalisée dans le plan de symétrie central P du plancher et les autres coupes en s'éloignant progressivement du plan P.
- les figures 4a à 4d, des coupes longitudinales partielles du plancher élastique de la figure 2, en s'éloignant progressivement encore plus du plan P, au delà du plan de coupe de la figure 3e.
- et les figures 5a et 5b illustrent l'influence de la compression et de l'extension des ondulations sur le tapis posé sur le plancher, selon l'invention.

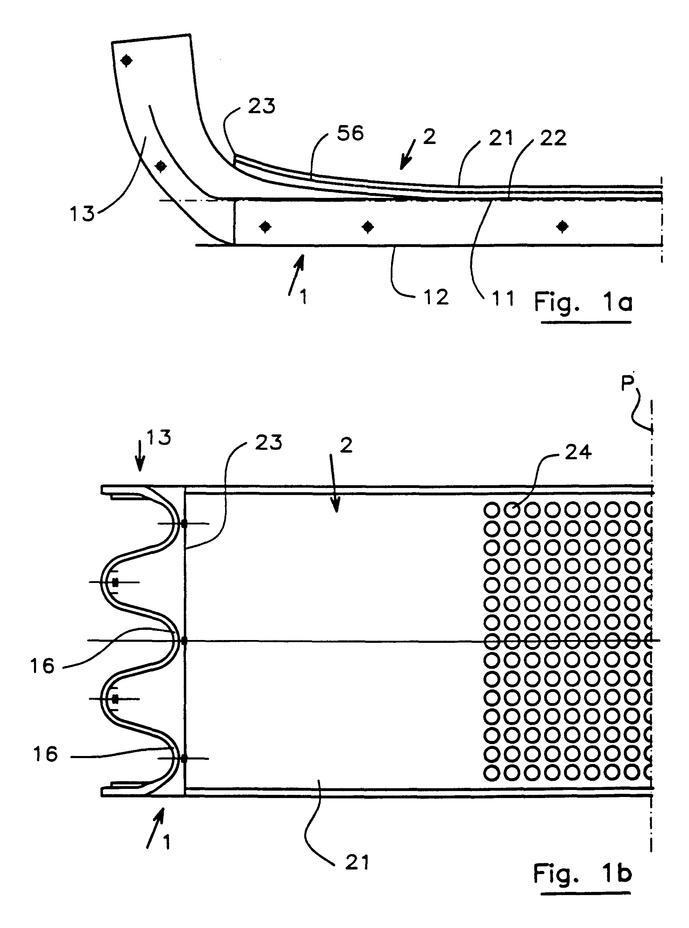

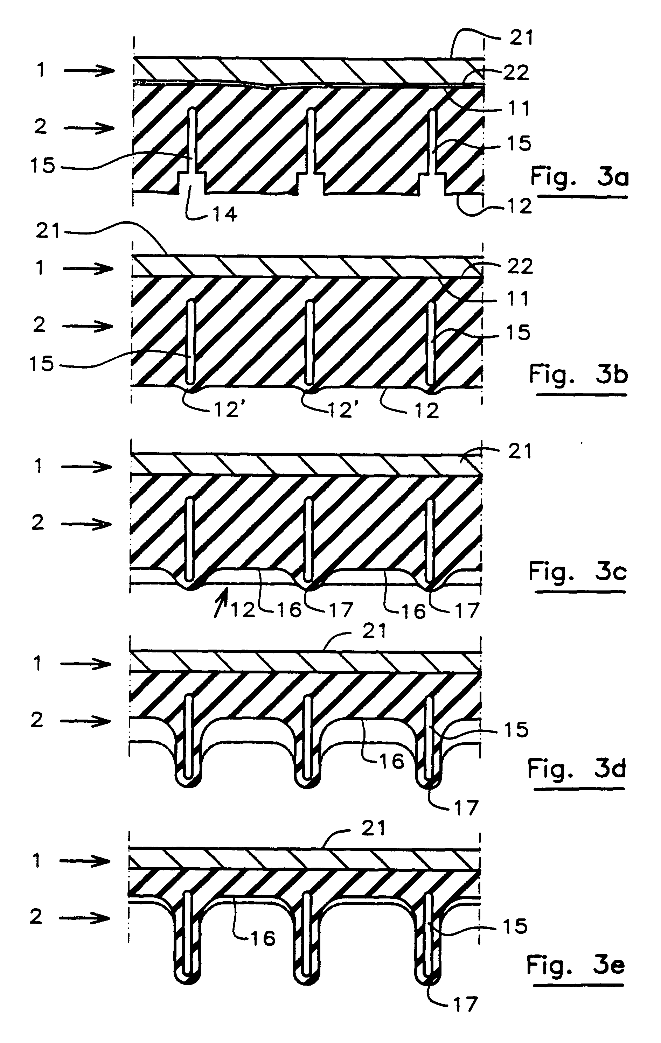

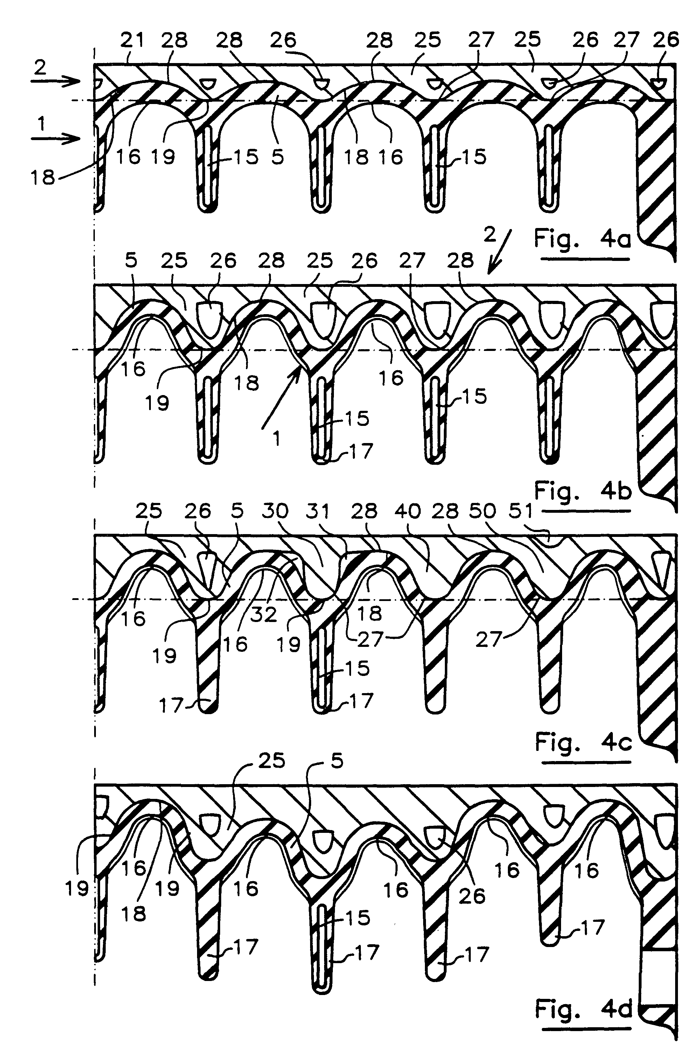

Selon les figures 1a, 1b et 2a, un plancher élastique 1, symétrique par rapport à un plan central P, présente un trottoir comportant une surface supérieure 11 et une surface inférieure 12, et des bords remontants 13 destinés à permettre de raccorder le plancher 1 au reste du soufflet. De tels planchers présentent de manière connue des ondulations 5 qui commencent en général à apparaître seulement à une certaine distance du plan P. Une région centrale 61 du trottoir est ainsi plane, c'est-à-dire que les ondulations 5 n'y débouchent pas. C'est ainsi qu'à la figure 3a (coupe dans le plan P), les renforts métalliques 15 débouchent par leurs prolongements 14 à la face inférieure 12 qui est plane. Lorsqu'on s'éloigne progressivement de part et d'autre du plan P, apparaissent successivement à la face inférieure 12 des protubérances 12' (Fig. 3b) puis des ondulations 5, formées d'alternances de rainures 16 et de nervures 17 (Fig. 3c), dont l'amplitude est de plus en plus prononcée comme le montrent les figures 3d et 3e, jusqu'à ce que, comme représenté à la figure 4a, la face supérieure 11 présente également des ondulations correspondantes alternant des nervures 28 et des rainures 27, les nervures 28 suivant le profil des rainures 16, et ce avec une amplitude toujours plus prononcée au fur et à mesure que l'on s'éloigne du plan P (Fig. 4a à 4c).

Un cas extrême est représenté à la figure 4d où les nervures 16 sont regroupées par groupes de deux et sont situées à des niveaux verticaux différents, ceci pouvant intervenir au voisinage des bords montants 13 et le long de ceux-ci.

Ces planchers 2 sont destinés à être montés par deux de part et d'autre d'une pièce de forme générale rectangulaire 60, dénommée anneau central, et qui est montée de manière flottante.

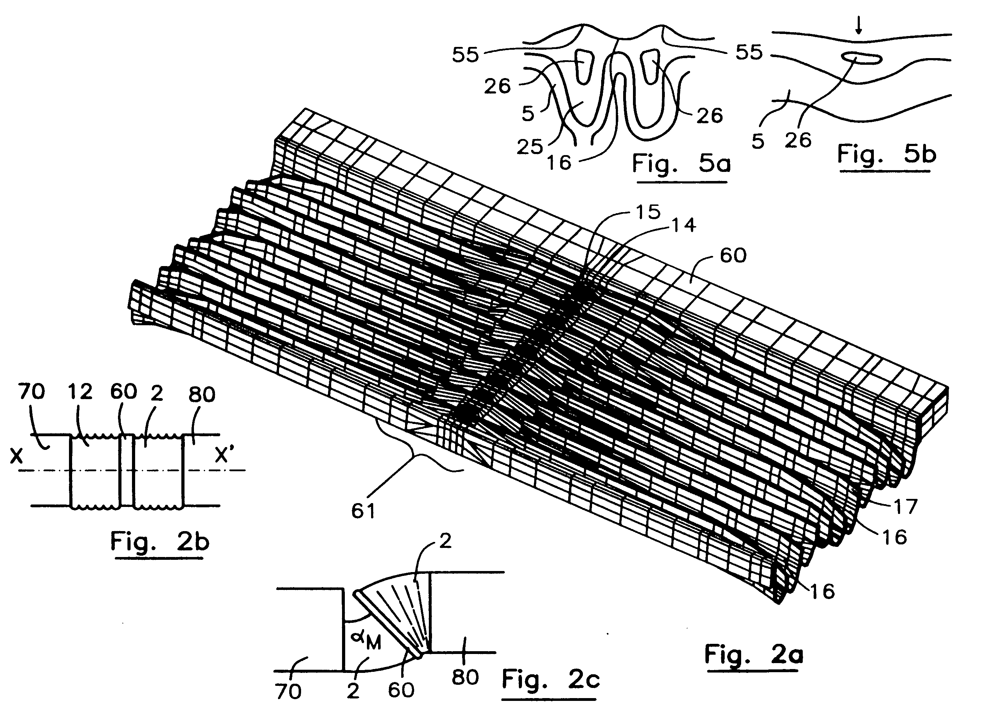

Dans la configuration représentée à la figure 2b, deux voitures adjacentes 70 et 80 roulent en ligne droite, et l'axe de l'anneau central 60 est parallèle à l'axe des ondulations et perpendiculaire à l'axe longitudinal XX' de déplacement des voitures.

Dans la configuration représentée à la figure 2c, qui est un exemple de configuration extrême, correspondant à un virage serré suivi d'un contre-virage, les axes des voitures 70 et 80 restent parallèles, mais décalés transversalement, et les deux planchers sont ouverts en éventail suivant un angle maximal d'ouverture α_{M}, l'anneau 60 étant alors décalé angulairement par rapport à sa position normale représentée à la figure 2b.

Selon l'invention on pose, au moins sur une partie de la région du plancher 1 dont la face supérieure 11 présente des ondulations (nervures 18, et rainures 19) un tapis qui présente avantageusement des prolongements (25,30,40,50) qui viennent remplir au moins partiellement les rainures 19. Ces prolongements peuvent être réalisés sous forme de nervures auquel cas le tapis 2 pourra avantageusement être réalisé par extrusion, mais il est également possible dans le cadre de la présente invention de prévoir des plots espacés les uns des autres.

Comme le montrent les figures 4a à 4d, les prolongements référencés 25 remplissent entièrement les rainures 19, le bord inférieur 27 des prolongements 25 venant s'appuyer au fond des rainures 19, et la face inférieure 22 du tapis 2 épouse également en 28 le contour des nervures 18 du plancher 1. Autrement dit le profil de la face inférieure 22 du tapis 2 est complémentaire du profil des ondulations du plancher 1.

On sépare ainsi les fonctions d'appui et de déformation c'est-à-dire que les ondulations du plancher 1 permettent d'absorber les déformations du plancher lors des déplacements des voitures dans les courbes, alors que le tapis 2 permet d'assurer aux passagers un déplacement sur sa surface supérieure 21, le découplage étant obtenu par le simple fait que le tapis 2 est uniquement posé sur le plancher 1 (à l'exception toutefois d'un ou plusieurs points d'arrimage localisés).

Les prolongements 25 présentent des régions centrales 26 dépourvues de matière qui permettent au tapis 1 de mieux suivre les déformations du plancher 1 que ce soit en extension ou en compression comme le montrent les figures 5a et 5b. Le tapis 2 peut être dans ce cas également réalisé par extrusion.

Les prolongements peuvent remplir toute la surface des ondulations, mais ils peuvent être dépourvus de régions centrales 26. Dans cette variante, les prolongements portent la référence 40 à la figure 4c sur laquelle on a rassemblé à titre illustratif quatre variantes possibles de prolongements.

A la figure 4c, on a également représenté avec la référence 50 une variante des prolongements 25 et 40. Les prolongements 50 remplissent entièrement les ondulations 5, mais la face supérieure 21 du tapis présente des rainures 51 centrées sur les rainures 19 et qui permettent d'éviter en particulier la formation des nervures 55 lorsque les ondulations 5 sont en compression, ou bien d'en diminuer l'amplitude (voir figure 5a).

Une autre variante de prolongements, référencée 30, est également représentée à la figure 4c. Ces prolongements 30 se présentent sous la forme de nervures dont les bords 31, par exemple des bords droits, présentent un jeu 32 avec la face supérieure des ondulations 5 qui jouxte les sommets 18, et dont la partie inférieure 33 est en contact avec le fond des rainures 19, de manière à former un appui pour le tapis 2.

La présence du tapis 1, outre le découplage entre les fonctions d'appui et de déformation, permet d'augmenter l'amplitude des ondulations sans nuire au déplacement des passagers, ce qui permet de conférer à ces ondulations une développée qui est au moins égale à l'élongation maximale atteinte localement par le plancher, ce qui évite que le caoutchouc ne travaille en traction.

On a représenté à la figure 1b un tapis 2 présentant des bords latéraux 23 qui ne recouvrent pas les bords remontants 13 du plancher 1, c'est-à-dire un tapis disposé sur les seules régions sur lesquelles des passagers sont susceptibles de marcher.

On remarquera qu'il est également possible de recouvrir ces bords remontants 13 à l'aide du tapis 2.

A titre de variante, il est également possible de ne disposer de tapis 2 que sur les seules régions du plancher 1 sur lesquelles les ondulations débouchent sur la face supérieure 11 (c'est-à-dire les régions représentées aux figures 4a à 4d), soit 2 tapis par plancher 1.

Le tapis 2 peut être renforcé mécaniquement au voisinage de sa face supérieure 21, par exemple par des armatures 56 (figure 1a).

## Revendications

1. Plancher élastique (1) destiné notamment à un soufflet de passage entre deux voitures qui, lors de leur déplacement en ligne droite, se déplacent selon une direction longitudinale, ledit plancher élastique présentant des ondulations (5) transversales permettant audit plancher (1) de suivre les déplacements relatifs desdites voitures dans les courbes, tout en permettant à des passagers de circuler entre lesdites voitures en marchant sur la face supérieure (11) du plancher, au moins une zone de ladite face supérieure ayant une surface ondulée présentant des régions de sommet, et des régions en creux orientées dans le sens transversal et correspondant aux dites ondulations **caractérisé en ce qu'**il comporte un tapis (2) en matériau élastique dont la face inférieure (22) est posée sur la face supérieure (11) du plancher élastique (1) de manière à recouvrir au moins une partie d'une dite zone ayant une surface ondulée.

2. Plancher selon la revendication 1 **caractérisé en ce que** ledit tapis (2) comporte à sa face inférieure (22) des prolongements (25,30,40,50) pénétrant au moins partiellement dans lesdites régions en creux.

3. Plancher selon la revendication 2 **caractérisé en ce que** lesdits prolongements (25,30,40,50) sont des nervures.

4. Plancher selon la revendication 3 **caractérisé en ce qu'**au moins certaines des nervures présentent un profil complémentaire de celui des régions en creux (19) des ondulations (5).

5. Plancher selon la revendication 3 **caractérisé en ce qu'**au moins certaines des nervures présentent une région (31) bordant la face inférieure du tapis et qui présente un jeu (32) avec les régions en creux (19) des ondulations (5) correspondantes lorsque le tapis (2) est posé sur le plancher (1).

6. Plancher selon une des revendications 3 à 5 **caractérisé en ce que** les nervures s'étendent sur une majeure partie ou sur la totalité de la longueur des régions en creux (19).

7. Plancher selon une des revendications 3 à 6 **caractérisé en ce qu'**au moins certaines desdites nervures (25) présentent une région centrale (26) dépourvue de matière.

8. Plancher selon une des revendications 3 à 7 **caractérisé en ce que** la face supérieure du plancher présente des stries (51) disposées au dessus d'au moins certaines desdites nervures (25,30,40,50).

9. Plancher selon une des revendications précédentes **caractérisé en ce que** le tapis en matériau élastique présente au voisinage de sa surface une charge de renfort mécanique (56).

10. Plancher selon une des revendications précédentes **caractérisé en ce que** le tapis (2) en matériau élastique est au moins en partie en mousse à alvéoles ouvertes ou fermées.

11. Plancher selon une des revendications précédentes **caractérisé en ce qu'**il comporte une région centrale (65) de passage dont la face supérieure est dépourvue desdites ondulations (5), et **en ce que** le tapis en matériau élastique est posé sur toute la surface du plancher.

12. Plancher selon une des revendications précédentes **caractérisé en ce que** la longueur de la développée des ondulations (5) est supérieure ou égale à l'élongation maximale atteinte par le plancher.

13. Soufflet d'interconnexion entre deux voitures **caractérisé en ce qu'**il comporte deux planchers (1) selon une des revendications précédentes séparés par un anneau central (60).

## Claims

1. Flexible floor (1) intended particularly for a communicating vestibule between two carriages which, when travelling in a straight line, move in a longitudinal direction, said flexible floor having transverse undulations (5) allowing said floor (1) to follow the relative movements of said carriages around bends while enabling passengers to move between the carriages by walking over the upper surface (11) of the floor, at least one zone of said upper surface having an undulating surface with peak regions and valley regions oriented in the transverse direction and corresponding to said undulations, **characterised in that** it comprises a covering (2) of flexible material the underside (22) of which is laid on the upper surface (11) of the flexible floor (1) so as to cover at least part of a said zone having an undulating surface.

2. Floor according to claim 1, **characterised in that** said covering (2) comprises, on its underside (22), protrusions (25, 30, 40, 50) penetrating at least partially into said valley regions.

3. Floor according to claim 2, **characterised in that** said protrusions (25, 30, 40, 50) are ribs.

4. Floor according to claim 3, **characterised in that** at least some of the ribs have a profile which complements that of the valley regions (19) of the undulations (5).

5. Floor according to claim 3, **characterised in that** at least some of the ribs have a region (31) bordering the lower surface of the covering and having some play (32) with the valley regions (19) of the corresponding undulations (5) when the covering (2) is laid on the floor (1).

6. Floor according to one of claims 3 to 5, **characterised in that** the ribs extend over the majority or all of the length of the valley regions (19).

7. Floor according to one of claims 3 to 6, **characterised in that** at least some of said ribs (25) have a central region (26) which has no material.

8. Floor according to one of claims 3 to 7, **characterised in that** the upper surface of the floor has striations (51) disposed above at least some of said ribs (25, 30, 40, 50).

9. Floor according to one of the preceding claims, **characterised in that** the covering of flexible material has a mechanical reinforcing load close to its surface (56).

10. Floor according to one of the preceding claims, **characterised in that** the covering (2) of flexible material consists at least partly of foam with open or closed cells.

11. Floor according to one of the preceding claims, **characterised in that** it comprises a central region (65) for walking on, the upper surface of which has none of said undulations (5), and **in that** the covering of flexible material is laid over the entire surface of the floor.

12. Floor according to one of the preceding claims, **characterised in that** the length of the development of the undulations (5) is greater than or equal to the maximum elongation reached by the floor.

13. Interconnecting vestibule between two carriages, **characterised in that** it comprises two floors (1) according to one of the preceding claims, separated by a central ring (60).

## Patentansprüche

1. Elastischer Boden (1), der insbesondere für einen Faltenbalg für den Durchgang zwischen zwei Fahrzeugen bestimmt ist, die sich während ihrer Verlagerung in gerader Linie gemäß einer Längsrichtung verlagern, wobei der elastische Boden transversale Wellungen (5) aufweist, die es dem Boden (1) gestatten, den Relativverlagerungen der genannten Fahrzeuge in den Kurven zu folgen, während er es den Passagieren gestattet, zwischen den genannten Fahrzeugen zu zirkulieren, indem sie über die obere Fläche (11) des Bodens laufen, wobei wenigstens eine Zone der genannten oberen Fläche eine gewellte Oberfläche hat, die Spitzenbereiche und Vertiefungsbereiche aufweist, welche in Transversalrichtung ausgerichtet sind und den genannten Wellungen entsprechen, **dadurch gekennzeichnet, dass** er eine Decke bzw. Matte (2) aus elastischem Material hat, deren untere Fläche (22) auf die obere Fläche (11) des elastischen Bodens (1) in der Art und Weise gelegt ist, dass sie wenigstens einen Teil einer genannten Zone, die eine gewellte Oberfläche hat, bedeckt.

2. Boden gemäß Anspruch 1, **dadurch gekennzeichnet, dass** die Decke bzw. Matte (2) auf ihrer unteren Fläche (22) Verlängerungen bzw. Fortsätze (25, 30, 40, 50) hat, die wenigstens teilweise in die genannten Mulden- bzw. Vertiefungsbereiche eindringen.

3. Boden gemäß Anspruch 2, **dadurch gekennzeichnet, dass** die Verlängerungen bzw. Fortsätze (25, 30, 40, 50) Rippen bzw. Sicken sind.

4. Boden gemäß Anspruch 3, **dadurch gekennzeichnet, dass** wenigstens gewisse der Rippen bzw. Sicken ein Profil aufweisen, das komplementär zu demjenigen der Mulden-bzw. Vertiefungsbereiche (19) der Wellungen (5) ist.

5. Boden gemäß Anspruch 3, **dadurch gekennzeichnet, dass** wenigstens gewisse der Rippen bzw. Sicken einen Bereich (31) aufweisen, welcher die untere Fläche der Decke bzw. Matte begrenzt und welcher ein Spiel (32) mit den Mulden- bzw. Vertiefungsbereichen (19) der entsprechenden Wellungen (5) aufweist, wenn die Decke bzw. Matte (2) auf den Boden (1) gelegt ist.

6. Boden gemäß einem der Ansprüche 3 bis 5, **dadurch gekennzeichnet, dass** sich die Rippen bzw. Sicken über einen Hauptteil oder über die Gesamtheit der Länge der Mulden- bzw. Vertiefungsbereiche (19) erstrecken.

7. Boden gemäß einem der Ansprüche 3 bis 6, **dadurch gekennzeichnet, dass** wenigstens gewisse der genannten Rippen bzw. Sicken (25) einen Zentralbereich (26) aufweisen, der nicht mit Materie bzw. Material versehen ist.

8. Boden gemäß einem der Ansprüche 3 bis 7, **dadurch gekennzeichnet, dass** die obere Fläche des Bodens Streifen bzw. Rillen (51) aufweist, die über wenigstens gewissen der genannten Rippen bzw. Sicken (25, 30, 40, 50) angeordnet sind.

9. Boden gemäß einem der vorhergehenden Ansprüche, **dadurch gekennzeichnet, dass** die Decke bzw. Matte aus elastischem Material in der Nähe ihrer Oberfläche ein Einsatzgut bzw. einen Füllstoff für die mechanische Verstärkung (56) aufweist.

10. Boden gemäß einem der vorhergehenden Ansprüche, **dadurch gekennzeichnet, dass** die Decke bzw. Matte (2) aus elastischem Material wenigstens teilweise aus Schaum mit offenen oder geschlossenen Zellen ist.

11. Boden gemäß einem der vorhergehenden Ansprüche, **dadurch gekennzeichnet, dass** er einen zentralen Bereich (65) für den Durchgang hat, dessen obere Fläche nicht mit den genannten Wellungen (5) versehen ist, und dass die Decke bzw. Matte aus elastischem Material auf die gesamte Oberfläche des Bodens gelegt ist.

12. Boden gemäß einem der vorhergehenden Ansprüche, **dadurch gekennzeichnet, dass** die Länge der Evolute der Wellungen (5) größer oder gleich der Maximaldehnung ist, die durch den Boden erreicht wird.

13. Faltenbalg für die Miteinanderverbindung zwischen zwei Fahrzeugen, **dadurch gekennzeichnet, dass** er zwei Böden (1) gemäß einem der vorhergehenden Ansprüche hat, die durch einen mittigen Ring (60) getrennt sind.
